# FASCICULE DE BREVET EUROPEEN

(11) **EP 3 243 039 B1**
(45) Date de publication et mention de la délivrance du brevet: **20.02.2019**
(21) Numéro de dépôt: 15817772.5
(22) Date de dépôt: 07.12.2015
(51) Int. Cl.: G01B 21/04, G01B 3/30

(54) **PROCÉDÉ ET DISPOSITIF POUR LA MESURE DU SUIVI D'UNE TRAJECTOIRE SOUS CHARGE**
VERFAHREN UND VORRICHTUNG ZUM MESSEN DER BEFOLGUNG EINES PFADES UNTER LAST
METHOD AND DEVICE FOR MEASURING THE FOLLOWING OF A PATH UNDER LOAD

(30) Priorité: 05.12.2014 FR 1461954
(43) Date de publication de la demande: 15.11.2017
(73) Titulaire: Université de Nantes, 44035 Nantes Cedex 1 (FR); Centre National de la Recherche Scientifique, 75016 Paris (FR)
(72) Inventeur: GARNIER, Sébastien, 44240 La Chapelle sur Erdre (FR); FURET, Benoît, 44300 Nantes (FR)
(74) Mandataire: Ipside
(86) Numéro de dépôt international: PCT/EP2015/078893
(87) Numéro de publication internationale: WO 2016/087681

(56) Documents cités:
- EP-A1- 0 258 471
- US-A1- 2005 016 008
- US-A1- 2007 162 404

## Description

L'invention concerne un procédé et un dispositif pour la mesure du suivi d'une trajectoire sous charge. L'invention est plus particulièrement, mais non exclusivement, destinée aux domaines de la robotique et de la machine-outil.

Les documents US5259120 / EP 0526056 ou US5813128 / EP0786644 décrivent un dispositif, plus généralement connu sous le nom de « ball-bar », et un procédé pour l'analyse de la précision d'une machine-outil dans le suivi d'une trajectoire. Ce dispositif de l'art antérieur consiste en une barre télescopique liée par des rotules à ses extrémités entre, d'une part, un point fixe et d'autre part un point mobile porté matériellement par un organe d'une machine-outil, généralement la broche de ladite machine, apte à se déplacer par rapport audit point fixe. Le procédé consiste à déplacer le point mobile selon une trajectoire circulaire centrée sur le point fixe et à mesurer, durant cette trajectoire, les variations de longueur de la barre télescopique. Ces variations de longueur correspondent à des défauts dans le suivi de la trajectoire et permettent de caractériser la précision dynamique de la machine-outil objet de l'essai. Dans le cas d'une machine-outil, la rigidité de la machine est très importante en regard des efforts que ladite machine subit au cours de son utilisation, de sorte que cette caractérisation dynamique est représentative de la précision de la machine. Dans le cas d'un robot, la rigidité de la chaîne cinématique est nettement inférieure à celle d'une machine-outil de sorte qu'une telle caractérisation n'est pas représentative des capacités dudit robot, dont la précision et la capacité de suivi de trajectoire sont affectées par les chargements qui lui sont appliqués. Selon l'art antérieur, un robot est ainsi caractérisé en statique vis-à-vis de la raideur de sa chaîne cinématique en appliquant, par l'intermédiaire d'un dispositif de chargement, un torseur d'effort sur sa partie apte à recevoir un effecteur, généralement le poignet, alors que les mouvements sont bloqués et en mesurant la déviation de position dudit poignet sous l'effet dudit torseur. Ces mesures caractérisent la raideur de la chaîne cinématique et mettent en évidence les jeux, les jeux sous charge et les hystérésis de positionnement, données qui sont introduites dans des tables de correction de commande permettant de compenser, au moins partiellement, ces défauts en opération, essentiellement pour obtenir un positionnement précis. Cette méthode de l'art antérieur est suffisante pour un réalisant des opérations de manipulation dites « *pick and place* » ou plus généralement des opérations en positionnement fixe comme un perçage ou un point de soudure. Cependant, les robots sont de plus en plus utilisés pour des opérations nécessitant un suivi d'une trajectoire comme pour un détourage, un ébavurage, un perçage orbital, un cordon de soudure, une soudure par friction malaxage ou une fabrication par ajout de matière sans que cette liste ne soit exhaustive, ladite trajectoire devant être suivie avec une vitesse parfaitement contrôlée. Les méthodes de caractérisation de l'art antérieur ne permettent pas d'appréhender, et par suite de corriger, les effets conjugués des accélérations et des efforts sur la qualité de suivi de ladite trajectoire.

Le document US 6 662 261 décrit un dispositif de calibrage des mouvements d'un robot ou d'une machine-outil selon 6 degrés de libertés, utilisant 6 barres de mesures télescopiques s'étendant entre 2 ensembles de 3 sphères contenus chacun dans un plan, l'un étant fixe et l'autre étant lié à l'organe mobile de la machine ou du robot. Selon un mode particulier de réalisation de ce dispositif, les 6 barres de mesure sont actives et permettent d'appliquer un torseur d'effort sur le plan défini par les 3 sphères liées à l'organe mobile. Toutefois ce dispositif est complexe à la fois dans sa conception, dans sa mise en oeuvre et dans l'interprétation des résultats qui en sont tirés.

L'invention vise à résoudre les inconvénients de l'art antérieur et concerne à cette fin un dispositif pour la mesure d'une trajectoire en charge d'une première pièce en mouvement par rapport à une seconde pièce, comprenant :
a. une barre télescopique active comprenant un coulisseau coulissant dans un fourreau, apte à produire un effort entre ses deux extrémités, et comprenant:
   ai. des moyens de mesure de la longueur de ladite barre ;
   aii. des moyens d'accouplement selon une liaison comprenant deux degrés de liberté en rotation à chaque extrémité de ladite barre ;
   aiii. des moyens pour la mesure de l'effort appliqué à la barre selon son axe longitudinal ;
b. des moyens de liaison pour lier chaque extrémité de la barre respectivement à la première et à la deuxième pièce comprenant des moyens de mesure des composantes spatiales de l'effort appliqué à l'un desdits moyens de liaison.

Ainsi la connaissance des composantes spatiales de l'effort appliqué par la barre selon son axe longitudinal et de l'orientation de la barre que ce soit par mesure directe ou à partir des composantes de l'effort; permettent d'étudier la réponse sous charge des chaînes cinématiques impliquées dans la trajectoire réalisée. Dans tout le texte les termes « barre télescopique active » désignent une barre télescopique, ou vérin, apte à délivrer un effort selon son axe longitudinal, quelle que soit la technologie utilisée pour produire cet effort.

L'invention est avantageusement mise en oeuvre selon les modes de réalisation exposés ci-après lesquels sont à considérer individuellement ou selon toute combinaison techniquement opérante.

Selon un mode de réalisation du dispositif objet de l'invention les moyens d'accouplement comprennent une liaison rotule à au moins une des extrémités de la barre. La liaison rotule autorise une grande liberté de mouvements et permet ainsi d'utiliser le dispositif objet de l'invention pour caractériser le robot selon des trajectoires très diverses. Elle offre aussi l'avantage de ne pas transmettre les couples d'efforts ce qui se révèle avantageux dans certaines conditions de mesure et de caractérisation.

Selon un autre mode de réalisation du dispositif objet de l'invention, compatible avec le précédent, les moyens d'accouplement comprennent une liaison à joint de cardan à au moins une des extrémités de la barre. La liaison cardan permet, notamment, d'appliquer plus facilement des efforts de traction. Elle permet par ailleurs une mesure directe des angles de rotation des deux pivots du joint de cardan.

Avantageusement, le dispositif objet de l'invention comporte des moyens de mesure des composantes spatiales de l'effort appliqué à chaque moyen de liaison. Ainsi la connaissance des composantes spatiales de l'effort sur chaque moyen de liaison permet de connaître l'orientation d'une pièce par rapport à l'autre, notamment dans la réalisation de trajectoires complexes.

Avantageusement, le dispositif objet de l'invention comprend des moyens de réglage de l'intensité l'effort appliqué par la barre télescopique. Ainsi le dispositif permet de calibrer une même trajectoire sous plusieurs intensités d'effort.

Selon un mode de réalisation, la barre active comporte des moyens de ressort pour l'application d'un effort proportionnel à la longueur de ladite barre. Ce mode de réalisation est particulièrement simple de réalisation et de mise en oeuvre et permet notamment de régler l'intensité du chargement par la trajectoire.

Selon un autre mode de réalisation la barre active comporte des moyens pour l'application d'un effort constant quelle que soit la longueur de la barre. Ce mode de réalisation procure plus de souplesse d'utilisation.

L'invention concerne également un procédé pour la mesure d'une trajectoire sous charge en déplacement relatif d'une pièce par rapport à une autre mettant en oeuvre le dispositif objet de l'invention selon l'un quelconque de ses modes de réalisation, lequel procédé comprend les étapes consistant à :
i. connecter les extrémités de la barre télescopique à la première et à la deuxième pièce ;
ii. programmer une trajectoire relative de la première pièce par rapport à la deuxième pièce, comprenant un mouvement d'entrée et un mouvement de sortie de trajectoire, telle que la distance entre les deux pièces selon l'axe longitudinal de la barre soit constante au cours de ladite trajectoire ;
iii. appliquer au moyen de la barre télescopique un effort d'intensité définie selon l'axe longitudinal de la barre télescopique aux moyens de liaison ;
iv. réaliser la trajectoire définie à l'étape ii) en mesurant au cours de ladite trajectoire :
   - les variations de longueur de la barre télescopique ;
   - les variations de l'effort appliqué sur l'axe longitudinal de la barre ;
   - les variations des composantes de l'effort appliqué à l'un des moyens d'accouplement.

Ainsi le procédé objet de l'invention permet de mesurer les écarts de suivi de trajectoire alors que les pièces sont soumises à un effort de direction et d'intensité déterminées.

Selon un mode de réalisation particulier du procédé objet de l'invention, mettant en oeuvre une barre télescopique dans laquelle l'effort est appliqué par des moyens de ressort, l'intensité de l'effort appliqué à l'étape iii) est déterminée par le mouvement d'entrée de la trajectoire. Ce mode de réalisation est particulièrement simple de mise en oeuvre et permet de couvrir rapidement un domaine de fonctionnement de l'ensemble à calibrer.

Selon ce même mode particulier de réalisation, la mesure de l'effort longitudinal de l'étape iv) est obtenue par la mesure de la longueur de la barre télescopique.

Selon un mode de mise en oeuvre du procédé objet de l'invention, la première pièce est fixe et la trajectoire est réalisée par la seconde pièce. Ce mode de réalisation est similaire aux tests de calibrage réalisés par les dispositifs ball-bar de l'art antérieur mais ajoute l'influence du chargement sur ces tests, qui sont ainsi directement comparables aux tests sans chargement obtenus par les méthodes de l'art antérieur.

Selon ce mode de réalisation, la trajectoire programmée à l'étape ii) et réalisée à l'étape iv) est avantageusement un arc de cercle.

Selon une variante de réalisation avantageuse, l'axe longitudinal de la barre télescopique n'est pas parallèle au plan de l'arc de cercle parcouru au cours de l'étape iv). Les moyens de mesure des composantes spatiales de l'effort permettent de mesurer à tout instant l'orientation de l'effort et donc de la barre au cours de la trajectoire, ainsi le dispositif et le procédé objet de l'invention permettent la mise en évidence de défauts tridimensionnels de suivi de trajectoire, difficiles à mettre en évidence avec les moyens de l'art antérieur.

Selon un mode de réalisation du procédé objet de l'invention mettant en oeuvre un dispositif comprenant une liaison par joint de cardan à l'une de ses extrémité, celui-ci comprend une étape consistant à réaliser une mesure de l'azimut ou de l'élévation de la barre.

L'invention concerne également un procédé pour la détermination de la réponse vibratoire d'une pièce selon une configuration d'orientation définie, mettant en oeuvre un dispositif selon l'invention comportant une liaison par joint cardan aux deux extrémités de la barre et comprenant les étapes consistant à :
- appliquer une sollicitation périodique sur les deux extrémités de la barre ;
- mesurer la réponse à cette sollicitation périodique par la variation de longueur de la barre.

L'invention est exposée ci-après selon ses modes de réalisation préférés, nullement limitatifs, et en référence aux figures 1 à 6 dans lesquelles :
- la figure 1 représente selon une vue schématique de face un exemple de réalisation du dispositif objet de l'invention ;
- la figure 2 montre selon une vue de dessus un exemple schématique de réalisation d'une trajectoire de contrôle ou de calibrage avec le dispositif de la figure 1 ;

- la figure 3 est un exemple d'utilisation, selon une vue de face, du dispositif objet de l'invention entre deux organes mobiles ;
- la figure 4 est organigramme d'un exemple de réalisation du procédé objet de l'invention ;
- la figure 5 représente selon une vue schématique de face un exemple de réalisation du dispositif objet de l'invention dans lequel l'une des liaison d'accouplement de la barre est réalisée par un joint de cardan ;
- et la figure 6 montre selon une vue schématique de face un exemple de réalisation du dispositif objet de l'invention dans lequel les deux liaisons d'accouplement de la barre sont réalisées par des joints de cardan.

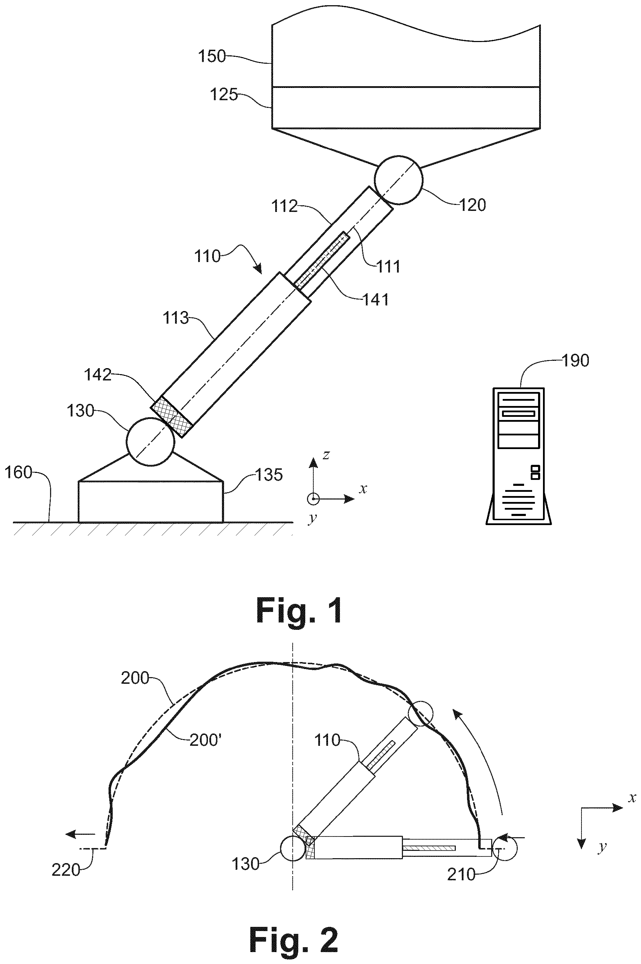

Figure 1, selon un exemple de réalisation du dispositif objet de l'invention, celui-ci est mis en oeuvre pour la mesure d'une trajectoire d'un organe mobile d'une machine-outil (150) ou d'un robot, par rapport à une référence fixe (160). Ledit dispositif comporte une barre (110) télescopique active, comprenant un coulisseau (112) coulissant dans un fourreau (113), apte à produire un effort entre ses deux extrémités. Lesdites extrémités comprennent des moyens de d'accouplement (120, 130) permettant de réaliser la liaison avec les moyens de liaison (125, 135) fixés, l'un (125) à l'organe (150) mobile et l'autre (135) à la référence (160) fixe, selon cet exemple de mise en oeuvre. Selon cet exemple de réalisation, lesdites liaisons sont des liaisons rotules de sorte que celles-ci ne transmettent par de couples. La barre (110) télescopique est active et comporte des moyens pour générer un effort selon la direction de son axe (111) longitudinal. Selon des exemples non limitatifs et non exhaustifs, lesdits moyens pour la génération d'un effort consistent en des moyens agissant entre le fourreau (113) et le coulisseau (112) et comprennent : des moyens de ressorts de traction ou de compression, comme des rondelles élastiques, des moyens pneumatiques ou hydrauliques, des moyens électriques par exemple sous la forme d'un micromoteur linéaire, d'un moteur piézoélectrique ou d'un dispositif électromagnétique. Ladite barre (110) télescopique comporte également des moyens (140) de mesure du déplacement relatif du coulisseau (112) par rapport au fourreau (130), par exemple, sous la forme d'une règle optique, permettant de mesurer les variations de longueur de la barre (110). Un capteur d'effort (142), ici placé au niveau du fourreau (113), permet de mesurer l'effort auquel la barre est soumise selon son axe (111) longitudinal. Alternativement, lorsque les moyens pour la génération de l'effort consistent en des moyens de ressort, la mesure de l'effort longitudinal est réalisée par les moyens (140) de mesure du déplacement.

Selon cet exemple de réalisation du dispositif objet de l'invention, le moyen de liaison (135) avec la référence fixe (160) comporte des moyens de mesure (non représentés) des composantes de l'effort appliqué à ce moyen selon les axes *x, y* et z dans un repère lié audit moyen (135). Selon un autre mode de réalisation, le moyen de liaison (120) fixé à l'organe mobile (150) comprend également des moyens de mesure des composantes de l'effort qui lui est appliqué dans son propre repère. Ainsi, l'intensité de l'effort appliqué par la barre télescopique (110) étant connue par l'intermédiaire du capteur (142) de la barre les composantes des efforts déterminées par ces capteurs permettent de déterminer l'orientation de la barre télescopique par rapport auxdits moyens (125, 135) de liaison.

La mise en oeuvre du dispositif objet de l'invention consiste à réaliser une trajectoire définie de l'organe mobile (150) par rapport à la référence fixe (160) alors que la barre télescopique applique un effort entre les deux moyens (125, 135) de liaison et à faire l'acquisition durant cette trajectoire, des variations de longueur de la barre télescopique, de la valeur de l'effort appliqué selon l'axe (110) longitudinal de la barre (110) et des composantes de l'effort appliquées sur le ou les moyens de liaison qui sont pourvus d'un tel capteur. Selon un exemple de réalisation ces données sont transmises à un calculateur (190) muni d'une carte d'acquisition, par des moyens radios ou des moyens filaires.

Figure 2, selon un exemple de mise en oeuvre, la barre télescopique (110) étant installée entre les deux moyens de liaison une trajectoire est réalisée par l'organe mobile. Selon cet exemple de réalisation, ladite trajectoire comporte une portion d'entrée (210) correspondant ici à un déplacement linéaire parallèle à l'axe *x*. Ce déplacement provoque un raccourcissement significatif de la barre télescopique (110) et est aisément détecté sur les signaux issus des moyens de mesure de la longueur de ladite barre. Il permet ainsi de détecter le début de l'essai. La trajectoire (200) de mesure correspond, selon cet exemple de réalisation, à une trajectoire en arc de cercle centrée sur l'une des extrémités de la barre télescopique, par exemple, la liaison rotule (130) connectant la barre au moyen de liaison avec la référence fixe. Ainsi, en théorie, la longueur de la barre télescopique est constante au cours de cette trajectoire. Selon le type de robot ou de machine analysée et sa configuration articulaire, la trajectoire utilisée pour la mise en oeuvre du procédé est une trajectoire quelconque, préférentiellement une trajectoire contenue sur une surface sphérique, sans que la longueur théorique de la barre télescopique soit nécessairement constante au cours du suivi de ladite trajectoire. Dans tous les cas, trajectoire (200') réellement suivie fait apparaître des écarts par rapport à la trajectoire (200) théorique. Ces écarts sont en pratique de second ordre par rapport au rayon de la trajectoire théorique (200) programmée. Ainsi, selon la nature de l'organe mobile, robot ou machine-outil, les écarts entre la trajectoire théorique (200) et la trajectoire réelle (200') sont 1000 à 10000 fois inférieurs au rayon de ladite trajectoire, si celle-ci est un cercle, ou aux variations théoriques de la longueur de la barre télescopique si ladite trajectoire est quelconque. Aussi, même en cas d'application de l'effort par des moyens simples tel qu'un ressort agissant entre le fourreau et le coulisseau de la barre télescopique, les variations d'effort consécutives à ces écarts de trajectoire sont négligeables et sont, si besoin, déterminables soit à partir du capteur d'effort de la barre télescopique soit à partir des variations de longueur de cette barre si une grande précision est requise. Une portion (220) de sortie de la trajectoire correspond à un mouvement linéaire modifiant de manière significative la longueur de la barre télescopique. Ainsi ce mouvement permet de détecter la sortie de la trajectoire de mesure. La comparaison de l'effort mesuré sur le capteur de la barre télescopique et des composantes de cet effort sur les moyens de mesure du ou des moyens de liaison, permet à tout moment de connaître l'orientation de la barre télescopique dans un repère lié audit moyen de liaison. Ce principe de mesure permet également de déterminer l'orientation des axes de mesure des composantes d'effort du moyen de liaison ou d'accouplement par rapport aux axes du robot ou de la machine. Ainsi un premier cycle de calibrage consiste à réaliser des déplacements linéaires similaires aux déplacements correspondant aux portions (210, 220) d'entrée et de sortie dans différentes orientations de la barre télescopique. Lorsque la barre télescopique est orientée selon une direction qui n'est pas contenue dans le plan de la trajectoire (200), le dispositif objet de l'invention permet de détecter des défauts de suivis tridimensionnels, par exemple, des déplacements parasites de l'organe mobile selon l'axe z alors que la trajectoire programmée se situe entièrement dans le plan *x*, *y*. Selon un mode particulier de réalisation, correspondant par exemple au cas où l'effort imposé par la barre télescopique est produit par un ressort, la longueur de la trajectoire correspondant à la portion (210) d'entrée qui fixe la longueur de la barre télescopique et la compression du ressort, permet également de fixer la force appliquée par la barre télescopique sur les moyens de liaison. Avantageusement, selon ce mode de réalisation, ladite barre télescopique comprend des moyens (non représentés) permettant de précontraindre lesdits moyens de ressort pour définir ainsi la force appliquée.

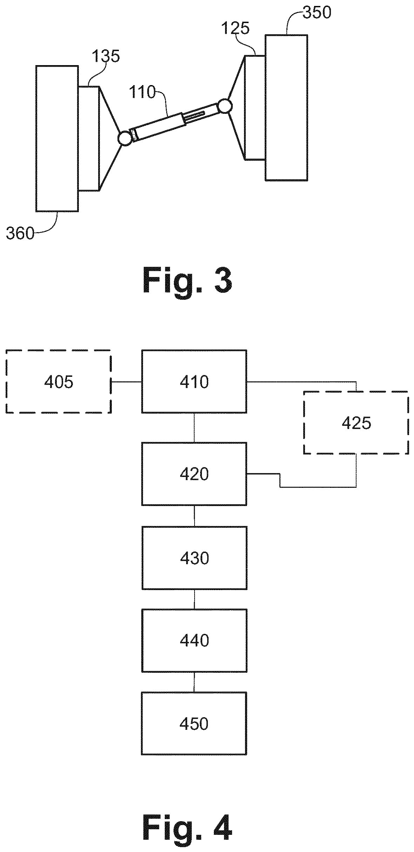

Figure 3, selon un autre exemple d'utilisation du dispositif objet de l'invention, celui-ci est installé entre deux organes (360, 350) mobiles, aptes à se déplacer relativement l'un par rapport à l'autre, mais dans un mouvement coordonné. Ce type de situation correspond par exemple au cas d'un ensemble de rivetage ou l'un des organes mobiles porte la bouterolle et l'autre le tas permettant de réaliser le rivetage. Un autre exemple d'application susceptible de relever de cette mise en oeuvre du dispositif objet de l'invention à des fins de calibrage ou de contrôle est décrit dans le document EP 1 689 558. Dans ce cas les deux moyens de liaison (135, 125) comportent des moyens de mesure des composantes de l'effort. Ainsi, en plus de la capacité de mesurer le comportement de la machine sous charge, la mesure des composantes permet de déterminer des défauts de positionnement et d'orientation relatifs des deux organes mobiles selon n'importe quelle trajectoire.

Figure 4, selon un exemple de réalisation du procédé objet de l'invention, la barre télescopique est installée entre les moyens de liaison au cours d'une étape d'installation (410). De manière optionnelle, plus particulièrement lorsque les moyens de chargement de la barre sont des moyens de ressort, une étape de calibrage (405) permet en montant ladite barre sur un banc de calibrage de déterminer la raideur réelle de la barre. Avantageusement ce banc de calibrage est réalisé dans une matière à faible coefficient de dilatation thermique et permet en même temps de calibrer précisément la longueur réelle de la barre télescopique et les moyens de mesure de sa variation de longueur au cours de cette même étape de calibrage (405). Au cours d'une étape de programmation (420), ici placée de manière arbitraire, mais non obligatoire, après l'étape d'installation, la trajectoire suivie lors de l'essai est programmée dans le repère de l'organe mobile ou de chaque organe mobile, selon le cas d'application. De manière optionnelle, cette étape de programmation (420) est précédée ou suivie d'une étape de positionnement (425) visant à positionner l'un des moyens de liaison, ou les deux, dans le repère des organes mobiles. Pour simplifier l'analyse des résultats, la trajectoire de mesure programmée lors de l'étape de programmation (420), est telle que selon la trajectoire théorique programmée, la longueur de la barre est constante. Au cours d'une étape (430) de chargement, la barre télescopique est chargée par sa mise en compression ou en tension. La méthode de réalisation de chargement dépend des moyens de génération d'effort. Lorsque ces moyens sont des moyens de ressort, cette mise en charge est par exemple réalisée lors de la trajectoire correspondant à la portion d'entrée de la trajectoire. Dans le cas où ces moyens sont pneumatiques, hydrauliques ou encore électriques, ceux-ci sont programmables sur une large plage de longueur de la barre télescopique. Au cours d'une étape de mesure (440) la trajectoire de mesure est suivie en même temps qu'est réalisée l'acquisition des signaux provenant des différents capteurs :
- le capteur de longueur de la barre télescopique ;
- le capteur d'effort de la barre télescopique ;
- les signaux correspondant aux composantes des efforts sur les moyens de liaison.

Selon un mode de réalisation particulier, cette étape de mesure comprend l'acquisition de signaux optionnels comme les courant de commande des moteurs d'axes de l'organe mobile ou les signaux issus des codeurs de déplacement de ces mêmes axes, afin d'obtenir un diagnostic plus précis du comportement de l'organe mobile. Les données ainsi acquises sont compilées au cours d'une étape de traitement (450) pour obtenir un diagnostic de fonctionnement. Ce cycle est alors repris avec une autre trajectoire, un autre effort imposé ou une autre vitesse de parcours de la trajectoire de mesure.

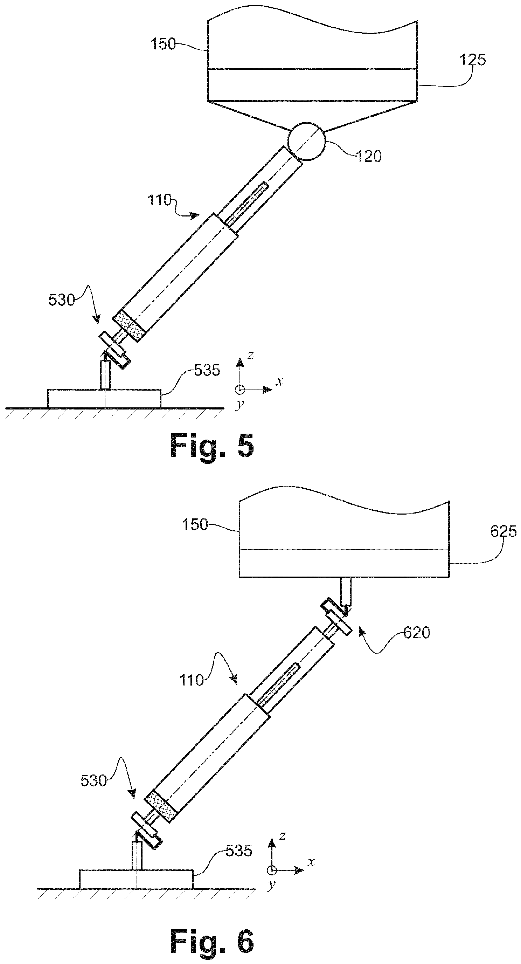

Figure 5, selon une variante de réalisation, l'un des accouplements (535) est réalisé par un joint de cardan (530), par exemple l'accouplement avec la référence (160) fixe, la liaison (120) du moyen (125) d'accouplement à l'autre extrémité de la barre (110) étant une liaison rotule. Ce mode de réalisation permet une mesure directe de l'angle d'azimut, c'est-à-dire dans le plan sur lequel fixé le moyen (535) d'accouplement, et de l'angle d'élévation, c'est-à-dire de l'angle formé par la barre (110) par rapport au plan sur lequel est fixé le moyen (535) d'accouplement portant la liaison par joint de cardan, soit la référence fixe (160) selon ce mode de mise en oeuvre. Ces mesures directes sont avantageusement mise en oeuvre au cours de l'étape de mesure du procédé objet de l'invention.

Figure 6, selon une autre variante de réalisation, les deux accouplements (625, 535) aux extrémités de la barre (110) sont réalisées par des joints (530, 620) de cardan. Ce mode de réalisation permet, par exemple, d'appliquer sur ces liaisons, par l'intermédiaire de barre (110) télescopique active, des sollicitations bidirectionnelles, en traction-compression, notamment des sollicitations périodiques de faible amplitude. Ainsi, ce mode de réalisation permet d'étudier les modes de vibration du robot, ou plus généralement du système caractérisé, selon différents azimuts et différentes élévations. L'application des sollicitations périodiques est réalisée soit directement au moyen de la barre (110) par exemple lorsque la barre comprend un actionneur pneumatique, hydraulique ou électrique, ou par des déplacements de l'une des extrémités de la barre. La mesure de la variation de longueur de la barre (110) permet de déterminer la réponse vibratoire du système étudié à ces sollicitations et notamment d'identifier les fréquences de ses premiers modes propres. Ce mode de réalisation permet au cours du suivi tridimensionnel d'une trajectoire de mesurer facilement les écarts d'orientation le long de ladite trajectoire.

La description ci-avant et les exemples de réalisation montrent que l'invention atteint les objectifs visés, en particulier en associant des moyens de génération et de mesure d'un effort axial à un dispositif similaire au ball-bar, le dispositif objet de l'invention permet d'analyser le comportement d'une machine ou d'un robot sous un chargement défini mais aussi par l'utilisation des informations relatives à cet effort et leurs évolutions au cours des trajectoires de mesure, de compléter les informations purement dimensionnelles par des informations d'orientation de la barre télescopique dans le repère de la machine.

## Revendications

1. Dispositif pour la mesure d'une trajectoire (200) en charge d'une première pièce (150, 350) en mouvement par rapport à une seconde pièce (160, 360), comprenant :
a. une barre(110) télescopique active comprenant un coulisseau (112) coulissant dans un fourreau (113), apte à produire un effort entre ses deux extrémités :
ai. des moyens (141) de mesure de la longueur de ladite barre ;
aii. des moyens (120, 130, 530, 620) d'accouplement selon une liaison comprenant respectivement deux degrés de liberté en rotation à chaque extrémité de ladite barre ;
aiii. des moyens (142) pour la mesure de l'effort appliqué à la barre selon son axe (111) longitudinal ;
b. des moyens (135, 535, 125, 625) de liaison pour lier chaque extrémité de la barre respectivement à la première et à la seconde pièce, **caractérisés en ce qu'**ils comprennent des moyens de mesure des composantes spatiales de l'effort appliqué à l'un desdits moyens de liaison.

2. Dispositif selon la revendication 1, dans lequel les moyens d'accouplement comprennent une liaison rotule (120, 130) à au moins une des extrémités de la barre.

3. Dispositif selon la revendication 1 ou la revendication 2, dans lequel les moyens d'accouplement comprennent une liaison (530, 620) à joint de cardan à au moins une des extrémités de la barre.

4. Dispositif selon la revendication 1, comprenant des moyens de mesure des composantes spatiales de l'effort appliqué à chaque moyen (135, 125) de liaison.

5. Dispositif selon la revendication 1, comprenant des moyens de réglage de l'intensité de l'effort appliqué par la barre (110) télescopique.

6. Dispositif selon la revendication 1, dans lequel la barre télescopique active comporte des moyens de ressort pour l'application d'un effort proportionnel à la longueur de ladite barre.

7. Dispositif selon la revendication 1, dans lequel la barre télescopique active comporte des moyens pour l'application d'un effort constant quelque soit la longueur de la barre.

8. Procédé pour la mesure d'une trajectoire (200) sous charge en déplacement relatif d'une pièce (150, 350) par rapport à une autre (160, 360) mettant en oeuvre un dispositif selon la revendication 1, **caractérisé en ce qu'**il comprend les étapes consistant à :
i. connecter (410) les extrémités de la barre télescopique à la première et à la deuxième pièce ;
ii. programmer (420) une trajectoire relative de la première pièce (150, 350) par rapport à la deuxième pièce (160, 360) comprenant un mouvement d'entrée (210) et un mouvement de sortie (220) de trajectoire telle que la distance entre les deux pièces selon l'axe (111) longitudinal de la barre télescopique (110) soit constante au cours de ladite trajectoire (200) ;
iii. appliquer (430) par la barre télescopique un effort d'intensité définie selon l'axe longitudinal de la barre télescopique aux moyens de liaison ;
iv. réaliser (440) la trajectoire définie à l'étape ii) en mesurant au cours de ladite trajectoire :
- les variations de longueur de la barre télescopique ;
- les variations de l'effort appliqué sur l'axe longitudinal de la barre ;
- les variations des composantes de l'effort appliqué à l'un des moyens (135, 125) d'accouplement.

9. Procédé selon la revendication 8, mettant en oeuvre un dispositif selon la revendication 6, dans lequel l'intensité de l'effort appliqué à l'étape iii) est déterminée par le mouvement d'entrée (210) de la trajectoire.

10. Procédé selon la revendication 9, dans lequel la mesure de l'effort longitudinal de l'étape iv) est obtenue par la mesure de la longueur de la barre télescopique.

11. Procédé selon la revendication 8, dans lequel la première pièce (160) est fixe et la trajectoire est réalisée par la seconde (150) pièce.

12. Procédé selon la revendication 9, dans lequel la trajectoire (200) programmée à l'étape ii) et réalisée à l'étape iv) est un arc de cercle.

13. Procédé selon la revendication 12 dans lequel l'axe longitudinal de la barre télescopique n'est pas parallèle au plan de l'arc de cercle (200) parcouru au cours de l'étape iv).

14. Procédé selon la revendication 8, mettant en oeuvre un dispositif selon la revendication 3 et comprenant au cours de la réalisation (440) de la trajectoire, la réalisation d'une mesure de l'azimut ou de l'élévation de la barre.

15. Procédé pour la détermination de la réponse vibratoire d'une pièce (150) selon une configuration d'orientation définie, mettant en oeuvre un dispositif selon la revendication 3 comportant une liaison par joint cardan aux deux extrémités de la barre (110) et comprenant les étapes consistant à :
- appliquer une sollicitation périodique sur les deux extrémités de la barre ;
- mesurer la réponse à cette sollicitation périodique par la variation de longueur de la barre.

## Patentansprüche

1. Vorrichtung zum Messen eines Lastpfades (200) eines ersten Teils (150, 350), der sich in Bezug auf einen zweiten Teil (160, 360) in Bewegung befindet, umfassend:
a. eine aktive Teleskopstange (110), die ein in einer Hülle (113) gleitendes Gleitstück (112) umfasst, die dazu in der Lage ist, zwischen ihren zwei Enden eine Kraft zu erzeugen:
ai. Mittel (141) zum Messen der Länge der Stange;
aii. Mittel (120, 130, 530, 620) zum Koppeln gemäß einer Verbindung, die jeweils zwei Drehfreiheitsgrade an jedem Ende der Stange umfasst;
aiii. Mittel (142) zum Messen der Kraft, die entlang ihrer Längsachse (111) an die Stange angelegt wird;
b. Verbindungsmittel (135, 535, 125, 625), um jedes Ende der Stange jeweils mit dem ersten und mit dem zweiten Teil zu verbinden, **dadurch gekennzeichnet, dass** sie Mittel zum Messen der räumlichen Komponenten der Kraft umfassen, die an eines der Verbindungsmittel angelegt wird.

2. Vorrichtung nach Anspruch 1, wobei die Koppelmittel eine Kugelgelenkverbindung (120, 130) an mindestens einem der Enden der Stange umfassen.

3. Vorrichtung nach Anspruch 1 oder Anspruch 2, wobei die Koppelmittel eine Kardangelenkverbindung (530, 620) an mindestens einem der Enden der Stange umfassen.

4. Vorrichtung nach Anspruch 1, die Mittel zum Messen der räumlichen Komponenten der Kraft umfassen, die an jedes Verbindungsmittel (135, 125) angelegt wird.

5. Vorrichtung nach Anspruch 1, die Mittel zum Einstellen der Intensität der von der Teleskopstange (110) angelegten Kraft umfasst.

6. Vorrichtung nach Anspruch 1, wobei die aktive Teleskopstange Federmittel zum Anlegen einer Kraft umfasst, die zur Länge der Stange proportional ist.

7. Vorrichtung nach Anspruch 1, wobei die aktive Teleskopstange Mittel zum Anlegen einer Kraft umfasst, die unabhängig von der Länge der Stange konstant ist.

8. Verfahren zum Messen eines Lastpfades (200) unter relativer Bewegung eines Teils (150, 350) in Bezug auf einen anderen (160, 360), welches eine Vorrichtung nach Anspruch 1 einsetzt, **dadurch gekennzeichnet, dass** es die Schritte umfasst des:
i. Verbindens (410) der Enden der Teleskopstange mit dem ersten und mit dem zweiten Teil;
ii. Programmierens (420) eines relativen Pfades des ersten Teils (150, 350) in Bezug auf den zweiten Teil (160, 360), der eine Eingangsbewegung (210) und eine Ausgangsbewegung (220) des Pfades derart umfasst, dass der Abstand zwischen den zwei Teilen entlang der Längsachse (111) der Teleskopstange (110) im Verlauf des Pfades (200) konstant ist;
iii. Anlegens (430), durch die Teleskopstange, einer Kraft von definierter Intensität entlang der Längsachse der Teleskopstange an die Verbindungsmittel;
iv. Ausführens (440) des im Schritt ii) definierten Pfades unter Messen, im Verlauf des Pfades:
- der Längenschwankungen der Teleskopstange;
- der Schwankungen der Kraft, die an der Längsachse der Stange angelegt wird;
- der Schwankungen der Komponenten der Kraft, die an eines der Koppelmittel (135, 125) angelegt wird.

9. Verfahren nach Anspruch 8, das eine Vorrichtung nach Anspruch 6 einsetzt, wobei die Intensität der Kraft, die im Schritt iii) angelegt wird, über die Eingangsbewegung (210) des Pfades bestimmt wird.

10. Verfahren nach Anspruch 9, wobei die Messung der Längskraft aus dem Schritt iv) über die Messung der Länge der Teleskopstange erhalten wird.

11. Verfahren nach Anspruch 8, wobei der erste Teil (160) fest ist, und der Pfad vom zweiten Teil (150) ausgeführt wird.

12. Verfahren nach Anspruch 9, wobei der im Schritt ii) programmierte und im Schritt iv) ausgeführte Pfad (200) ein Kreisbogen ist.

13. Verfahren nach Anspruch 12, wobei die Längsachse der Teleskopstange nicht zur Ebene des Kreisbogens (200), der im Verlauf des Schritts iv) durchlaufen wird, parallel ist.

14. Verfahren nach Anspruch 8, das eine Vorrichtung nach Anspruch 3 einsetzt und im Verlauf der Ausführung (440) des Pfades das Ausführen einer Messung des Azimuts oder der Elevation der Stange umfasst.

15. Verfahren zum Bestimmen der Schwingungsantwort eines Teils (150) gemäß einer Konfiguration von definierter Ausrichtung, das eine Vorrichtung nach Anspruch 3 einsetzt, die eine Verbindung über Kardangelenk an den zwei Enden der Stange (110) umfasst, und das die Schritte umfasst des:
- Anlegens einer periodischen Belastung an den zwei Enden der Stange;
- Messens der Antwort auf diese periodische Belastung über die Längenschwankung der Stange.

## Claims

1. Device for measuring a pathway (200) under load of a first part (150, 350), moving with respect to a second part (160, 360), comprising:
a. an active telescopic bar (110) comprising a slider (112) sliding in a sleeve (113), able to produce a force between the two ends thereof:
ai. means (141) for measuring the length of said bar;
aii. means (120, 130, 530, 620) for coupling in a connection comprising respectively two degrees of freedom in rotation at each end of said bar;
aiii. means (142) for measuring the force applied to the bar along the longitudinal axis (111) thereof;
b. connection means (135, 535, 125, 625) for connecting each end of the bar respectively to the first and to the second part, **characterised in that** they comprise means for measuring the spatial components of the force applied to one of said connection means.

2. Device according to claim 1, wherein the coupling means comprise a swivel connection (120, 130) at at least one of the ends of the bar.

3. Device according to claim 1 or claim 2, wherein the coupling means comprise a universal-joint connection (530, 620) at at least one of the ends of the bar.

4. Device according to claim 1, comprising means for measuring the spatial components of the force applied to each connection means (135, 125).

5. Device according to claim 1, comprising means for adjusting the intensity of the force applied by the telescopic bar (110).

6. Device according to claim 1, wherein the active telescopic bar comprises spring means for applying a force proportional to the length of said bar.

7. Device according to claim 1, wherein the active telescopic bar comprises means for applying a constant force whatever the length of the bar.

8. Method for measuring a pathway (200) under load in relative movement of one part (150, 350) with respect to another (160, 360) implementing a device according to claim 1, **characterised in that** it comprises the steps of:
i. connecting (410) the ends of the telescopic bar to the first and second parts;
ii. programming (420) a relative pathway of the first part (150, 350) with respect to the second part (160, 360), comprising a movement of entering (210) and a movement of exiting (220) of the pathway such that the distance between the two parts along the longitudinal axis (111) of the telescopic bar (110) is constant over said pathway (200);
iii. applying (430) by the telescopic bar a force of defined intensity along the longitudinal axis of the telescopic bar to the connection means;
iv. following (440) the pathway defined at step ii) while measuring, over said pathway:
- the variations in length of the telescopic bar;
- the variations in the force applied on the longitudinal axis of the bar;
- the variations in the components of the force applied to one of the coupling means (135, 125).

9. Method according to claim 8, implementing a device according to claim 6, wherein the intensity of the force applied at step iii) is determined by the movement of entering (210) of the pathway.

10. Method according to claim 9, wherein the measurement of the longitudinal force of step iv) is obtained by measuring the length of the telescopic bar.

11. Method according to claim 8, wherein the first part (160) is fixed and the pathway is followed by the second part (150).

12. Method according to claim 9, wherein the pathway (200) programmed at step ii) and followed at step iv) is an arc of a circle.

13. Method according to claim 12, wherein the longitudinal axis of the telescopic bar is not parallel to the plane of the arc of a circle (200) followed during step iv).

14. Method according to claim 8, implementing a device according to claim 3 and comprising, during the following (440) of the pathway, the performance of a measurement of the azimuth or elevation of the bar.

15. Method for determining the vibratory response of a part (150) according to a configuration with a defined orientation, implementing a device according to claim 3 and comprising a connection by universal joint at both ends of the bar (110) and comprising the steps of:
- applying a periodic bias to the two ends of the bar;
- measuring the response to this periodic bias by the variation in the length of the bar.
